# EUROPÄISCHE PATENTSCHRIFT

(11) **EP 4 054 932 B1**
(45) Veröffentlichungstag und Bekanntmachung des Hinweises auf die Patenterteilung: **10.01.2024**
(21) Anmeldenummer: 20816961.5
(22) Anmeldetag: 30.11.2020
(51) Int. Cl.: B64C 21/02, B64C 21/08, B64C 29/00

(54) **TRAGFLÄCHEN-ROTOR-ANORDNUNG, LUFTFAHRZEUG UND VERFAHREN ZUM BETREIBEN EINES LUFTFAHRZEUGES**
WING-ROTOR-ARRANGEMENT, AIRCRAFT AND METHOD FOR OPERATING AN AIRCRAFT
AGENCEMENT AILE-ROTOR, AERONEF ET PROCEDE POUR L'OPERATION D'UN AERONEF

(30) Priorität: 22.01.2020 DE 102020200741
(43) Veröffentlichungstag der Anmeldung: 14.09.2022
(73) Patentinhaber: VOLKSWAGEN AKTIENGESELLSCHAFT, 38440 Wolfsburg (DE)
(72) Erfinder: HOBUSCH, Salim, 38640 Goslar (DE); SCHRÖDER, Hendrik, 38173 Sickte (DE)
(86) Internationale Anmeldenummer: PCT/EP2020/083876
(87) Internationale Veröffentlichungsnummer: WO 2021/148173

(56) Entgegenhaltungen:
- DE-A1-102014 213 215
- DE-U1- 29 916 203
- GB-A- 2 555 439
- US-A- 2 959 377
- US-A- 4 828 203
- US-A1- 2004 065 772
- US-B1- 6 860 449

## Beschreibung

Die Erfindung betrifft eine Tragflächen-Rotor-Anordnung, ein Luftfahrzeug und ein Verfahren zum Betreiben eines Luftfahrzeuges.

Luftfahrzeuge, die in der Lage sind vertikal zu starten und landen (VTOL - Vertical Take off and Landing) sind in verschiedenen Ausführungen bekannt. Ein wesentlicher Vorteil derartiger Luftfahrzeuge ist, dass nur ein geringer Platzbedarf für Starts und Landungen besteht und keine Landebahn benötigt wird. Gleichzeitig kann ein horizontal gerichteter Antrieb einen Flugbetrieb mit erheblich höherer Reisegeschwindigkeit als beispielsweise ein Hubschrauber ermöglichen.

So können geeignete Flugzeuge mit Turbinenantrieb durch Strahllenkung den Triebwerksschub nach unten richten um Starts und Landungen zu vollführen. In der DE 292 4504 A1 wird ein Gasturbinentriebwerk vorgeschlagen, das mittels einer Schubablenkungseinrichtung den Schub in eine vertikale Richtung nach unten leitet und so ein Flugzeug in die Lage versetzen kann, senkrecht zu starten und zu landen. Nachteilig ist diese Lösung nur für Turbinentriebwerke geeignet, wobei die Lärm- und Abgasbelastung einen Einsatz im urbanen Raum kaum möglich erscheinen lässt.

Auch in der DE 42 37 873 A1 wird ein Flugzeug vorgeschlagen, das für senkrechte Starts und Landungen geeignet ist. Hierfür wird der Gasstrom mindestens eines Triebwerkes über ein Luftleitsystem derart über die Tragflächen des Flugzeuges geleitet, dass diese Auftrieb erzeugen, der für senkrechte Starts und Landungen genutzt wird. Nachteilig wird auch bei dieser Lösung der Gasstrom eines Turbinenstrahltriebwerkes genutzt, sodass ein Einsatz im urbanen Raum kaum möglich erscheint.

Nicht zuletzt wird auch in der DE 1 935 857 U ein Luft- oder Raumfahrzeug vorgeschlagen, bei dem ein Gasstrom durch einen Bläser in eine Kammer gedrückt wird, aus der die Luft mithilfe von wechselweise zu öffnenden oder zu schließenden Durchlässen nach entgegengesetzten Richtungen ausgeblasen werden kann. Die Durchlässe werden dann auch zur Steuerung des Flugzeuges im Schnellflug eingesetzt. Als Bläser werden Turbinentriebwerke oder Triebwerke mit einer Rückstoßanordnung vorgeschlagen. Auch diese sind nachteilig nicht in bewohntem Gebiet einsetzbar.

Weiter sind propellergetriebene Luftfahrzeuge mit sogenannten Kipprotoren bekannt, bei denen also die Rotoren für den Übergang von Vertikal- zum Horizontalflug, der sogenannten Transitionsphase drehbar sind, sodass mit diesen ein vertikaler Schub nach unten für Starts und Landungen als auch ein Schub in horizontaler Richtung für Flugbetrieb erzeugt werden kann. Nachteilig an Kipprotoren sind die hohen technischen Anforderungen an die Blattansteuerung der Rotoren als auch an die beweglichen Befestigungsmittel der Rotoren.

In der DE 299 16 203 U1 wird ein Flugzeug vorgeschlagen, bei dem in den Tragflächen Rotoren integriert sind, die einen vertikalen Schub erzeugen können. Das Flugzeug ist damit in der Lage senkrecht zu starten oder zu landen. Beim Übergang zum Flugbetrieb wird ein horizontal, also in Anströmrichtung der Tragflächen gerichteter Rotor am Heck des Flugzeuges gestartet. Die Öffnungen in den Tragflächen für die Rotoren werden mittels einer Jalousieanordnung für den Flugbetrieb verschlossen und die Tragfläche bietet dann genügend Auftrieb und ermöglicht einen Flugablauf nach Art eines herkömmlichen Flächenflugzeuges.

Nachteilig an dieser Lösung ist ein schlechtes aerodynamisches Verhalten der Tragflächen bei geschlossener Jalousieanordnung. Durch Spalten und Unebenheiten auf der Oberfläche der Tragfläche durch die Jalousieanordnung wird die Transition der strömungsmechanischen Grenzschicht von laminarer zu turbulenter Strömung begünstigt und dadurch der Auftrieb der Tragfläche gemindert und der Strömungswiderstand erhöht. Weiter nachteilig hat der Rotor bei geschlossener Jalousieanordnung keine Verwendung und sorgt lediglich für ein erhöhtes Gewicht des Luftfahrzeuges.

DE 10 2014 213 215 A1 offenbart ein Flugobjekt mit Fähigkeit zum vertikalen Starten und Landen. Hierzu ist ein Mantelpropeller vorgesehen, der von einem verstauten Zustand in einen ausgefahrenen Zustand überführt werden kann. Im verstauten Zustand ist eine Einlassöffnung und eine Auslassöffnung des Rotors verschlossen.

Der Erfindung liegt nun die Aufgabe zugrunde, eine Tragflächen-Rotor-Anordnung, ein Luftfahrzeug und ein Verfahren zum Betreiben eines Luftfahrzeuges vorzuschlagen, die die genannten Nachteile des Standes der Technik überwinden.

Die erfindungsgemäße Tragflächen-Rotor-Anordnung umfasst einen Rotor der in einer Tragfläche angeordnet ist. Die Schubrichtung des Rotors ist dabei weitestgehend senkrecht zur Anströmrichtung der Tragfläche ausgerichtet. Die Tragflächen der Tragflächen-Rotor-Anordnung kommen dabei im Flugbetrieb, in dem das Luftfahrzeug seinen Auftrieb über eine Anströmung der Tragfläche erhält, zum Einsatz. Im Start- und Landebetrieb erhält das Luftfahrzeug den notwendigen Auftrieb durch den Luftstrom der in den Tragflächen angeordneten Rotoren der erfindungsgemäßen Tragflächen-Rotor-Anordnung.

Erfindungsgemäß hat der Rotor in der Tragfläche eine mit einem Verschlussmittel verschließbare Einlassöffnung und eine mit einem weiteren Verschlussmittel verschließbare Auslassöffnung. Dabei sind die Verschlussmittel im geschlossenen Zustand teilweise luftdurchlässig.

Diese Luftdurchlässigkeit ermöglicht bei laufendem Rotor und geschlossenen Verschlussmitteln eine gezielte Beeinflussung der aerodynamischen Eigenschaften der Tragfläche. So kann durch einen Unterdruck im Bereich der Einlassöffnung des Rotors in der Tragfläche ein Absaugen der Luft auf der Oberseite der Tragfläche erreicht werden. Vorteilhaft kann so die abgebremste Grenzschicht auf der Oberfläche des Tragflügels im Bereich der Einlassöffnung durch Absaugung in ihrer Dicke gemindert werden und es kann sich eine energiereichere äußere Schicht an das Profil der Tragfläche anlegen. Auf der Unterseite der Tragfläche wird gleichzeitig Luft ausgeblasen, wodurch vorteilhaft eine Stabilisierung der Grenzschicht erfolgt, wodurch der Auftrieb der Tragfläche wesentlich gesteigert werden kann. Weiter vorteilhaft kann so der Luftwiderstand der Tragfläche reduziert und deren Auftrieb erhöht werden, was zu verbesserten Flugeigenschaften und einer höheren Energieeffizienz eines Luftfahrzeuges mit einer erfindungsgemäßen Rotor-Tragflächen-Anordnung führt. Besonders vorteilhaft erfolgt das Absaugen im Bereich der Verschlussmittel der Einlassöffnung des Rotors, in dem sonst aufgrund der durch das Verschlussmittel bedingten Unebenheiten auf der Oberfläche eine dickere Grenzschicht entsteht.

Besonders vorteilhaft gelingt es durch die Erfindung durch wenige, sehr kostengünstige Änderungen eine Rotor-Tragflächen-Anordnung zu schaffen, die nicht nur die Nachteile des Standes der Technik, nämlich die schlechten aerodynamischen Eigenschaften einer Tragflächen-Rotor-Anordnung mit Verschlussmittel, überwindet, sondern gelichzeitig auch eine gezielte Steuerung der aerodynamischen Eigenschaften der Tragflächen-Rotor-Anordnung ermöglicht.

Erfindungsgemäß erfolgt ein Ansaugen auf der Oberfläche der Tragfläche, also im Bereich der Einlassöffnung des Rotors und auf deren Unterseite im Bereich der Auslassöffnung des Rotors ein Ausblasen von Luft. Der Rotor arbeitet also im Flugbetrieb bei geschlossenen Verschlussmitteln der Einlass- und Auslassöffnungen weiter mit einer Schubrichtung vertikal nach unten und erzeugt dadurch einen Unterdruck im Bereich der Einlassöffnung des Rotors auf der Oberseite der Tragfläche und einen Überdruck im Bereich der Auslassöffnung des Rotors an der Unterseite der Tragfläche. Daher wird der Bereich zwischen Einlassöffnung und Rotor auch als Überdruckkammer und der Bereich zwischen Auslassöffnung und Rotor auch als Unterdruckkammer bezeichnet. In einer bevorzugten Ausgestaltung der Tragflächen-Rotor-Anordnung weisen die Verschlussmittel flächig verteilte Öffnungen auf. Diese Öffnungen stellen dabei eine strömungsmechanische Verbindung zwischen dem Raum zwischen Rotor und Verschlussmittel der Einlassöffnung auf der Oberseite der Tragfläche her. Dadurch sind die Öffnungen mit dem durch den Betrieb des Rotors erzeugten Unterdruck strömungsmechanisch verbunden und saugen Luft auf der Oberfläche der Tragfläche ab. Vorteilhaft kann durch die flächig verteilten Öffnungen die Grenzschicht flächig abgesaugt werden. Die konkrete Anzahl der Öffnungen, deren Größe, Abstand und Richtung sind dabei von der Ausgestaltung der Tragfläche und des Luftfahrzeuges abhängig und können durch einen Fachmann im Rahmen von Versuchen oder Simulationen ermittelt werden. Bevorzugt sind dabei die Öffnungen zylindrischer Bohrungen, da diese einfach und kostengünstig einzubringen sind. Die Öffnungen können auch konische Bohrungen sein oder auch einen Anstellwinkel aufweisen.

Bevorzugt weist das Verschlussmittel dabei zwischen 3 und 100, weiter bevorzugt zwischen 4 und 50 und besonders bevorzugt zwischen 5 und 20 Öffnungen pro Quadratmeter auf. Die Öffnungen haben dabei bevorzugt einen Durchmesser zwischen 0,01 und 5 mm, weiter bevorzugt zwischen 0,03 und 1 mm und besonders bevorzugt zwischen 0,05 und 0,2 mm. Vorteilhaft ist ein Luftfahrzeug mit einer derart ausgestalteten Tragflächen-Rotor-Anordnung hervorragend steuerbar.

In einer alternativen Ausgestaltung sind die Verschlussmittel zumindest teilweise porös ausgebildet. Die Porosität kann dabei beispielsweise durch einen Sinterprozess bei Herstellung der Verschlussmittel eingebracht werden. Vorteilhaft kann durch eine Porosität der Oberfläche eine sehr gute Gleichverteilung der Absaugöffnungen erreicht werden, und damit auch ein homogener Absaug- und/oder Ausblasbereich.

In einer anderen alternativen Ausgestaltung ist die Luftdurchlässigkeit der Verschlussmittel durch deren konstruktionsbedingten Spalten und Öffnungen gegeben. Beispielsweise können dies die Spalten eines Jalousievorhanges sein. Dabei können vorteilhaft durch Gestaltung der spaltenbildenden Kanten die Richtung der Luftansaugung und/oder des Ausblasens und durch die Größe der Öffnungen und Spalten die Größe des Luftstromes zur gezielten Steuerung der aerodynamischen Eigenschaften der Tragflächen-Rotor-Anordnung genutzt werden. Dabei kann die Gestaltung der spaltenbildenden Kanten zur Beeinflussung der Richtung der Luftansaugung und/oder des Luftausblasens und/oder die Größe der Öffnungen und Spalten innerhalb eines Verschlussmittels variieren, um die aerodynamischen Eigenschaften der Tragfläche im Flugbetrieb weiter zu optimieren.

Dabei können in Abhängigkeit der Anforderungen durch das konkrete aerodynamische Design eines Luftfahrzeuges auch unterschiedliche, die Luftdurchlässigkeit gewährleistende Ausgestaltungen innerhalb einer Tragflächen-Rotor-Anordnung zum Einsatz kommen, beispielsweise zylindrische Bohrungen zum Ansaugen der Luft und einem gesinterten Jalousievorhang zum Ausblasen der Luft, oder umgekehrt.

In einer bevorzugten Ausgestaltung der Verschlussmittel weisen diese mindestens eine Einrichtung zur Verstellung der Ausblas- und/oder Ansaugrichtung mindestens einer Öffnung auf. Bevorzugt weist eine Vielzahl oder weisen alle Öffnungen eine Einrichtung zur Verstellung der Ausblas- und/oder Ansaugrichtung auf. Vorteilhaft können durch die Verstellung der Ausblas- und/oder Ansaugrichtung die aerodynamischen Eigenschaften der Tragfläche differenziert während des Flugbetriebes an die konkreten Anforderungen der aktuellen Flugsituation angepasst werden. Dies ermöglicht vorteilhaft eine gute Steuerbarkeit während der Transitionsphase eines Luftfahrzeuges.

In einer weiteren bevorzugten Ausgestaltung der Tragflächen-Rotor-Anordnung ist mindestens eine Öffnung der Verschlussmittel verschließbar ausgebildet. Besonders bevorzugt sind dabei eine Vielzahl von Öffnungen oder alle Öffnungen erschließbar ausgebildet. Hierfür weisen die Öffnungen eine Verschlusseinrichtung, beispielsweise in Form von Lamellen oder eines expandierbaren Verschlusselements im Strömungskanal der Öffnung, auf. Vorteilhaft können so weitere Steuerungsmittel der aerodynamischen Eigenschaften der Rotor-Tragflächen-Anordnung bereitgestellt werden.

In einer bevorzugten Ausgestaltung der Tragflächen-Rotor-Anordnung ist der Rotor ein Doppelrotor. Ein Doppelrotor bezeichnet hier einen Rotor bei dem zwei Rotorblätter konzentrisch übereinander angeordnet sind. Die beiden Rotorblätter werden häufig zur Kompensation der Drehmomente in gegenläufigem Drehsinn betrieben. Vorteilhaft kann so die Leistungsfähigkeit des Rotors verbessert werden und damit auch der Luftstrom beim Ansaugen und Ausblasen der Luft erhöht werden.

In einer weiteren bevorzugten Ausgestaltung der Tragflächen-Rotor-Anordnung ist zwischen Verschlussmittel und Rotor mindestens eine Einrichtung zur Druckregulierung angeordnet. Die Einrichtung zur Druckregulierung kann beispielsweise ein Luftkanal mit einstellbarer Luftmenge sein. Der Luftkanal kann dabei beispielsweise vom Bereich der Einlassöffnung des Rotors zum Bereich der Auslassöffnung und/oder zu einem bestimmten Bereich der Tragfläche beispielsweise im in Anströmrichtung vorderen oder hinteren Tragflächenbereich führen. Durch eine Einrichtung zur Druckregulierung kann der anzusaugende und/oder auszublasende Luftstrom mittels einer Beeinflussung des Druckes gesteuert werden. Vorteilhaft kann so die Steuerbarkeit der Tragflächen-Rotor-Anordnung weiter verbessert werden.

Besonders bevorzugt ist auf beiden Seiten des Rotors zwischen Rotor und Verschlussmittel mindestens eine Einrichtung zur Druckregulierung angeordnet. Vorteilhaft kann so der anzusaugende beziehungsweise auszublasende Luftstrom noch genauer gesteuert werden.

In einer weiteren bevorzugten Ausgestaltung der Tragflächen-Rotor-Anordnung weist die Tragfläche auch außerhalb der Verschlusselemente Öffnungen auf, die mit dem Bereich vor oder nach dem Rotor, also dem Bereich der Einlass- oder Auslassöffnung strömungsmechanisch verbunden sind. Vorteilhaft können so die Vorteile der Erfindung, also die gezielte Beeinflussung der Grenzschicht nicht nur im Bereich der Verschlusselemente, sondern auf der gesamten Oberfläche der Tagfläche nutzbar gemacht werden. Eine Realisierung kann auf einfache Art und Weise durch Strömungskanäle erfolgen, die bevorzugt ein Ventil aufweisen.

Das erfindungsgemäße Luftfahrzeug weist mindestens eine erfindungsgemäße Tragflächen-Rotor-Anordnung auf. Bevorzugt weist das Luftfahrzeug zwei, drei oder vier erfindungsgemäße Tragflächen-Rotor-Anordnungen auf. Vorteilhaft ist das Luftfahrzeug so hervorragend steuerbar, auch in der Transitionsphase.

In einer bevorzugten Ausgestaltung des Luftfahrzeuges weist dieses einen oder mehrere Sensoren zur Erfassung von Parametern zur Bestimmung der Flugsituation auf. Eine Steuerungseinrichtung kann durch einen Vergleich der Sensordaten mit hinterlegten Versuchsdaten gezielt für jede Flugsituation die aerodynamischen Eigenschaften der mindestens einen Tragflächen-Rotor-Anordnung optimiert einstellen. Hierfür weist das Luftfahrzeug bevorzugt eine Steuerungseinrichtung und eine Speichereinrichtung auf, auf der verschiedene Flugsituationen entsprechende Steuerungsdaten für beispielsweise die Luftmenge, die Aus- oder Einblasrichtung und gegebenenfalls auch der Einblas- und/oder Ausblasort auf der Oberfläche der Tragfläche und/oder des Verschlussmittels hinterlegt sind.

Ein besonderer Vorteil der Erfindung liegt begründet in dem Umstand, dass es gelingt durch einfache Veränderungen eine Rotor-Flügel-Anordnung zu schaffen, die nicht nur die Nachteile des Standes der Technik, nämlich die negativen Einflüsse auf die aerodynamischen Eigenschaften der Tragfläche im Bereich der Verschlusselemente, kompensiert, sondern sogar darüber hinaus verbessert.

Das Verfahren zum Betreiben eines Luftfahrzeuges bezieht sich auf ein Luftfahrzeug umfassend:
- mindestens eine Tragfläche mit integriertem Rotor, wobei der Rotor eine Schubrichtung senkrecht zur Anströmrichtung der Tragfläche aufweist.
- ein Antriebsmittel mit einer Schubrichtung in Anströmrichtung der Tragfläche,
- ein Verschlussmittel zum Verschließen einer Einlassöffnung des Rotors und ein weiteres
   Verschlussmittel zum Verschließen der Auslassöffnung, wobei die Verschlussmittel im geschlossenen Zustand zumindest teilweise luftdurchlässig sind.

Das erfindungsgemäße Verfahren zum Betreiben des Luftfahrzeuges ist gekennzeichnet durch ein gezieltes Ansaugen und Ausblasen von Luft im Bereich der Verschlussmittel der Ein- und/oder Auslassöffnung des Rotors der Tragflächen-Rotor-Anordnung, um den Rotor als Hubrotor für einen senkrechten Start- und Landebetrieb des Luftfahrzeuges zu benutzen und durch die teilweise Luftdurchlässigkeit der Verschlussmittel im geschlossenen Zustand das aerodynamische Verhalten der Tragfläche bei geschlossenen Verschlussmittel zu beeinflussen.

In weiteren bevorzugten Ausgestaltungen des Verfahrens umfasst das Verfahren weitere Verfahrensschritte, beispielsweise:
- ein Vertikales Starten und/oder Landen des Luftfahrzeuges mit geöffneten Verschlussmitteln der Einlass- und/oder Auslassöffnung des Rotors,
- ein Starten des Antriebsmittels und den resultierenden Übergang von Start- und/oder Landetrieb in Flugbetrieb mit einer Bewegung in Anströmrichtung der mindestens einen Tragfläche;
- ein Schließen der Verschlussmittel.

Für eine weitere bevorzugte Ausgestaltung des Verfahrens weist das Luftfahrzeug eine Steuerungseinrichtung, eine Speichereinrichtung und eine Sensoreinrichtung zur Erfassung des aktuellen Flugzustandes auf. Auf der Speichereinrichtung sind dabei Daten über eine Vielzahl von Flugsituationen und verbundene Daten über entsprechende Steuerungsdaten für die Luftmenge, Aus- oder Einblasrichtung und gegebenenfalls auch den Einblas- und/oder Ausblasort auf der Oberfläche der Tragfläche und/oder des Verschlussmittels hinterlegt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen und Ausgestaltungen der Rotor-Tragflächen-Anordnung, des Luftfahrzeuges und des Verfahrens zum Betreiben des Luftfahrzeuges sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Draufsicht auf eine Tragflächen-Rotor-Anordnung,
- Figur 2: eine Draufsicht auf eine Tragflächen-Rotor-Anordnung mit geöffnetem Verschlussmittel,
- Figur 3: eine Schnittdarstellung einer Tragflächen-Rotor-Anordnung,
- Figur 4: eine Schnittdarstellung einer Tragflächen-Rotor-Anordnung, mit geöffnetem Verschlussmittel,
- Figur 5: eine vergrößerte Darstellung einer Lamelle eines Verschlussmittels,
- Figur 6: eine Schnittdarstellung einer Lamelle eines Verschlussmittels, und
- Figur 7: eine Schnittdarstellung einer Lamelle eines Verschlussmittels mit verschiedenen Ausführungen von Öffnungen.

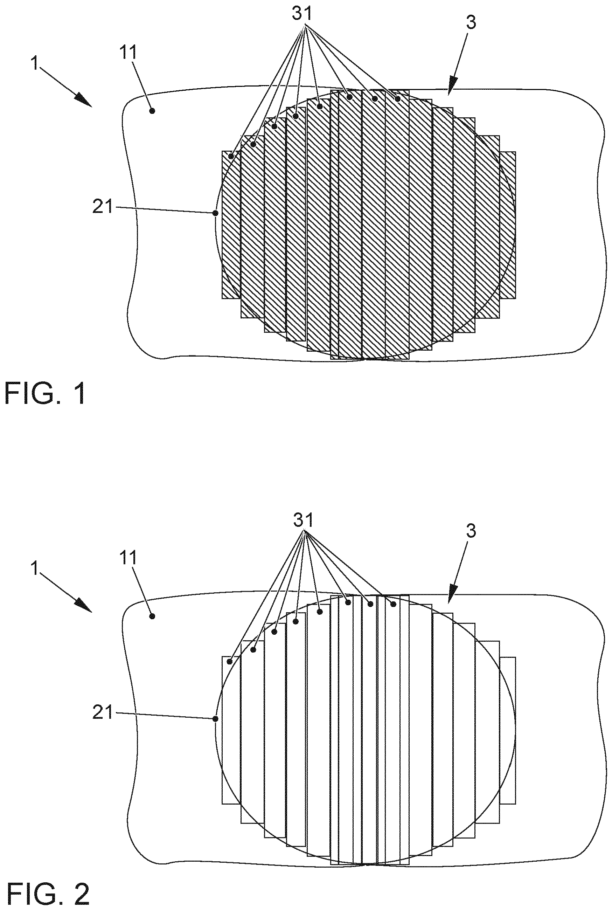

Figur 1 zeigt eine Draufsicht einer Rotor-Tragflächen-Anordnung 1, mit einer Tragfläche 11 und einer Einlassöffnung 21 eines Rotors. Die Einlassöffnung 21 des Rotors ist dabei mittels eines Verschlussmittels 3, bestehend aus einem Jalousievorhang mit Lamellen 31, verschlossen.

Figur 2 zeigt die Ansicht gemäß Figur 1 mit geöffnetem Verschlussmittel 3, das heißt, die Lamellen 31 des Verschlussmittels 3 sind aufgeklappt und ein Rotor kann Luft durch das Verschlussmittel (3) ansaugen.

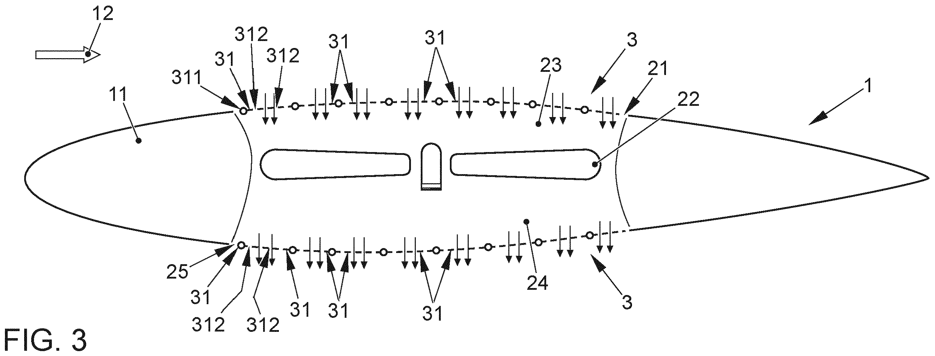

Figur 3 zeigt eine Schnittdarstellung einer Rotor-Tragflächen-Anordnung 1. Die Tragfläche 11 hat eine typische Querschnittsform einer Tragfläche, die bei einer Luftströmung mit einer Anströmrichtung 12 eine Kraft nach oben, also eine Auftriebskraft ausbildet. Innerhalb der Tragfläche 11 ist ein Rotor 22 angeordnet. Einlassöffnung 21 und Auslassöffnung 25 sind mit einem Verschlussmittel 3 verschlossen. Zwischen dem Rotor 22 und dem Verschlussmittel 3 der Auslassöffnung 25 bildet sich durch eine Rotation des Rotors eine Überdruckkammer 24 und zwischen dem Verschlussmittel 3 der Einlassöffnung 21 eine Unterdruckkammer 23.

Die Lamellen 31 des Verschlussmittels 3 sind in der Schließposition. Die Lamellen 31 weisen zum Öffnen ein Scharnier mit einer Drehachse 311 auf. Die Lamellen 31 haben zudem Öffnungen 312 in Form von zylindrischen Bohrungen, die eine Verbindung zwischen der Unterdruckkammer 23 oder der Überdruckkammer 24 und der Oberfläche der Verschlussmittel 3 aufweisen. So bildet sich ein ansaugender Luftstrom an der Einlassöffnung 21 und ein ausblasender Luftstrom an der Auslassöffnung. Die Darstellung gemäß Figur 3 zeigt eine Rotor-Tragflächen-Anordnung 1 im Flugbetrieb, die Verschlussmittel 3 sind geschlossen und der Rotor 22 ist im Flugbetrieb eingeschaltet und bildet durch den Betrieb die Unterdruckkammer 23 und die Überdruckkammer 24 aus.

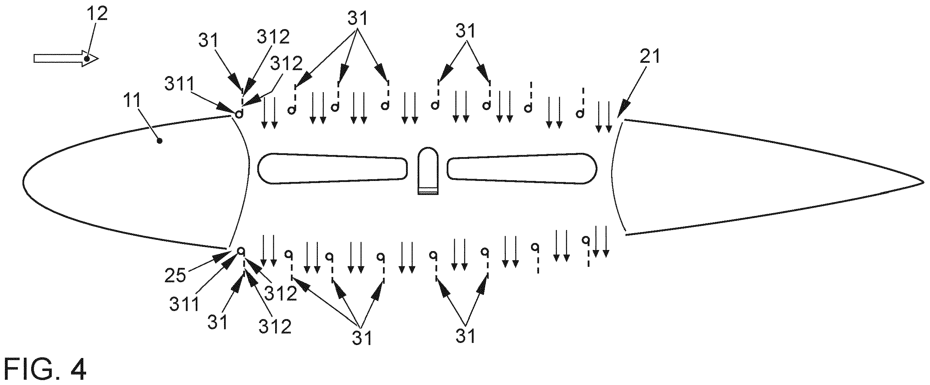

Figur 4 zeigt die Schnittdarstellung gemäß Figur 3 mit geöffneten Verschlussmitteln 3. Hierfür wurden die Lamellen 31 um die Drehachse 311 gedreht, sodass die Einlassöffnung 21 und die Auslassöffnung 25 freigegeben werden. Der Rotor 22 ist in Betrieb und kann nun ungehindert einen Luftstrom bewegen, der für Senkrechtstarts und -landungen notwendig ist.

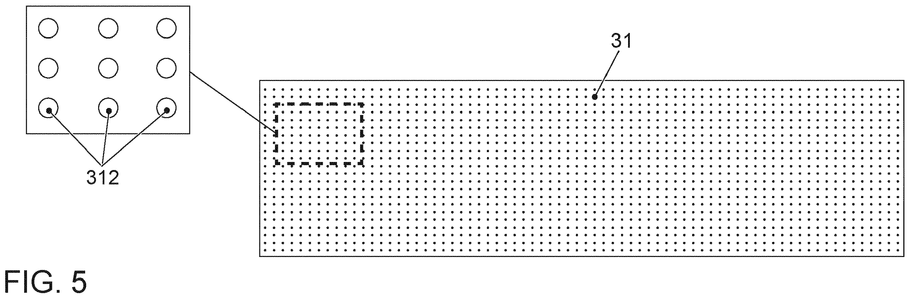

Figur 5 zeigt eine nähere Darstellung einer Lamelle 31. Die Lamelle 31 hat über ihre Oberfläche verteilte Öffnungen 312, durch die Luft angesaugt oder ausgeblasen wird. Auf der linken Seite der Figur ist eine größere Darstellung der über die Oberfläche der Lamelle 31 gleichverteilten Öffnungen 312 ersichtlich.

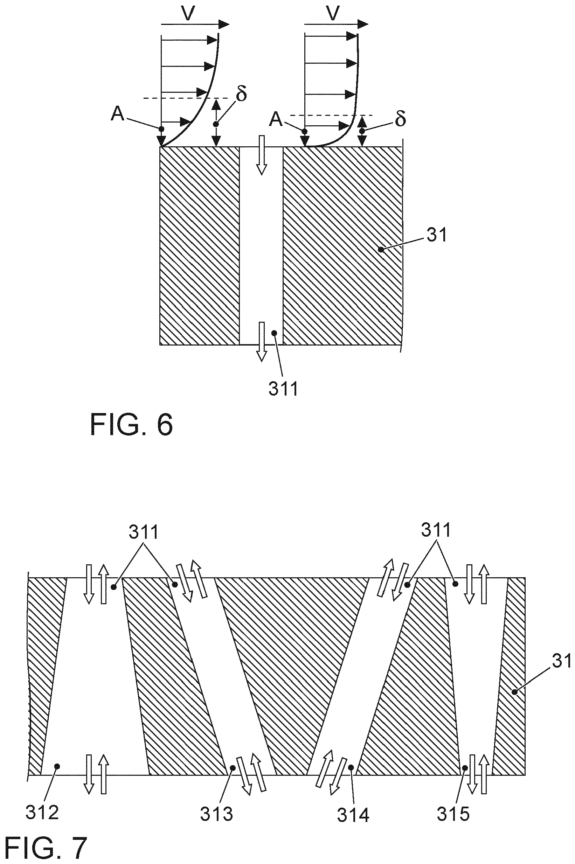

Figur 6 zeigt eine Schnittdarstellung einer Lamelle 31. Eine zylindrische Bohrung bildet die Öffnung 312. Im oberen Bereich der Figur sind zwei Diagramme ersichtlich, die die Strömungsgeschwindigkeit V in Abhängigkeit des Abstandes zur Oberfläche der Tragfläche und die zugehörige Grenzschichtdicke δ_{G} zeigen. Die Grenzschichtdicke δ_{G} ist dabei definiert als der Abstand zur Tragfläche innerhalb dessen mindestens 99 % der ungestörten Strömungsgeschwindigkeit V₀ erreicht werden. Dabei zeigen das linke Diagramm die ausgebildete Grenzschicht im Bereich eines Verschlussmittels 3 ohne die erfindungsgemäßen Öffnungen 312 in den Lamellen 31 und das rechte Diagramm die Grenzschicht auf einer Tragfläche 11 mit erfindungsgemäßen Öffnungen 312 in den Lamellen 31. In den Diagrammen ist erkennbar, dass die Dicke der Grenzschicht δ_{G} durch eine Luftansaugung durch Öffnungen 312 deutlich gemindert wird. Dies hat einen höheren Auftrieb und einen geringeren Luftwiderstand zur Folge und sorgt somit für eine erhebliche Energieeinsparung und für deutliche Steigerung der Flugsicherheit durch eine verbesserte Steuerbarkeit des Luftfahrzeuges.

Figur 7 zeigt eine Lamelle 31 eines Verschlussmittels 3. Exemplarisch sind verschiedene Formen von Öffnungen 312 gezeigt. Alle gezeigten Öffnungen können zum Ansaugen und Ausblasen von Luft genutzt werden. So werden konische Öffnungen 312, 315 gezeigt. Mit einer derartigen Öffnung lässt sich ein Luftstrom beschleunigen oder verlangsamen, abhängig von der Strömungsrichtung. Schräge Öffnungen 313, 314 ermöglichen das Festlegen einer Ausblas- oder Ansaugrichtung, durch deren Verwendung ebenfalls die aerodynamischen Eigenschaften einer Tragfläche 11 einstellbar sind.

### Bezugszeichenliste

1 Tragflächen-Rotor-Anordnung
11 Tragfläche
12 Anströmrichtung
21 Einlassöffnung
22 Rotor
23 Unterdruckkammer
24 Überdruckkammer
25 Auslassöffnung
3 Verschlussmittel
31 Lamelle
311 Drehachse
312, 315 konische Öffnung
313, 314 schräge Öffnung
δ_{G} Dicke der Grenzschicht
A Abstand zur Oberfläche der Tragfläche
V Strömungsgeschwindigkeit
V0 ungestörte Strömungsgeschwindigkeit

## Patentansprüche

1. Tragflächen-Rotor-Anordnung (1), aufweisend einen Rotor (22), wobei der Rotor (22) eine mit einem Verschlussmittel (3) verschließbare Einlassöffnung (21) und eine mit einem weiteren Verschlussmittel (3) verschließbare Auslassöffnung (25) aufweist, **dadurch gekennzeichnet, dass** der Rotor (22) in einer Tragfläche (11) derart angeordnet ist, dass die Schubrichtung des Rotors (22) senkrecht zur Anströmrichtung (12) der Tragfläche (11) gerichtet ist, wobei die Verschlussmittel (3) im geschlossenen Zustand teilweise luftdurchlässig sind.

2. Tragflächen-Rotor-Anordnung (1) nach Anspruch 1, **dadurch gekennzeichnet, dass** die Verschlussmittel (3) flächig verteilte Öffnungen aufweisen.

3. Tragflächen-Rotor-Anordnung (1) nach Anspruch 1, **dadurch gekennzeichnet, dass** die Verschlussmittel (3) zumindest teilweise porös sind.

4. Tragflächen-Rotor-Anordnung (1) nach Anspruch 1, **dadurch gekennzeichnet, dass** konstruktionsbedingte Spalten und Öffnungen der Verschlussmittel (3) die Luftdurchlässigkeit im geschlossenen Zustand gewährleisten.

5. Tragflächen-Rotor-Anordnung (1) nach Anspruch 2, **dadurch gekennzeichnet, dass** die Verschlussmittel (3) eine Einrichtung zur Verstellung der Richtung mindestens einer Öffnung (312) umfassen.

6. Tragflächen-Rotor-Anordnung (1) nach einem der Ansprüche 2 oder 5, **dadurch gekennzeichnet, dass** mindestens eine Öffnung (312) verschließbar ist.

7. Tragflächen-Rotor-Anordnung (1) nach einem der vorangehenden Ansprüche, **dadurch gekennzeichnet, dass** der Rotor (22) ein Doppelrotor ist.

8. Tragflächen-Rotor-Anordnung (1) nach einem der vorangehenden Ansprüche, **dadurch gekennzeichnet, dass** zwischen Verschlussmittel (3) und Rotor (22) mindestens eine Einrichtung zur Druckregulierung angeordnet ist.

9. Tragflächen-Rotor-Anordnung (1) nach Anspruch 7, **dadurch gekennzeichnet, dass** auf beiden Seiten des Rotors (22) zwischen Rotor (22) und Verschlussmittel (3) jeweils eine Einrichtung zur Druckregulierung angeordnet ist.

10. Tragflächen-Rotor-Anordnung (1) nach einem der vorangehenden Ansprüche, **dadurch gekennzeichnet, dass** die Tragfläche (11) außerhalb der Verschlussmittel (3) auf ihrer Oberseite und/oder der Unterseite Öffnungen aufweist, wobei die Öffnungen auf der Oberseite mit dem Raum zwischen Rotor (22) und Verschlussmittel (3) der Einlassöffnung (21) und/oder die Öffnungen auf der Unterseite mit dem Raum zwischen Rotor (22) und Verschlussmittel (3) der Auslassöffnung (25) verbunden sind.

11. Luftfahrzeug, aufweisend mindestens eine Tragflächen-Rotor-Anordnung (1) nach einem der vorangehenden Ansprüche.

12. Verfahren zum Betreiben eines Luftfahrzeuges, aufweisend mindestens eine Tragfläche (11) mit integriertem Rotor (22) mit einer Schubrichtung senkrecht zur Anströmrichtung (12) der Tragfläche (11), ein Antriebsmittel mit einer Schubrichtung in Anströmrichtung (12) der Tragfläche (11), wobei die Tragfläche (11) eine mit einem Verschlussmittel (3) verschließbare Einlassöffnung (21) des Rotors (22) und eine mit einem weiteren Verschlussmittel (3) verschließbare Auslassöffnung (25) aufweist, wobei die Verschlussmittel (3) im geschlossenen Zustand zumindest teilweise luftdurchlässig sind, **gekennzeichnet durch** ein gezieltes Ansaugen und Ausblasen von Luft im Bereich der Verschlussmittel (3) der Einlassöffnung (21) und/oder der Auslassöffnung (25) des Rotors (22) der Tragflächen-Rotor-Anordnung (1), um den Rotor (22) als Hubrotor für einen senkrechten Start- und Landebetrieb des Luftfahrzeuges zu benutzen und durch die teilweise Luftdurchlässigkeit der Verschlussmittel (3) im geschlossenen Zustand das aerodynamische Verhalten der Tragfläche (11) bei geschlossenen Verschlussmitteln zu beeinflussen.

13. Verfahren nach Anspruch 12, **dadurch gekennzeichnet, dass** mindestens einer der folgenden Verfahrensschritte zusätzlich ausgeführt wird:
a) Vertikales Starten des Luftfahrzeuges mit geöffneten Verschlussmitteln (3);
b) Starten des Antriebsmittels und Übergang in einen Flugbetrieb mit einer Bewegung in Anströmrichtung (12) der mindestens einen Tragfläche (11);
c) Schließen der Verschlussmittel (3).

14. Verfahren zum Betreiben eines Luftfahrzeuges nach einem der Ansprüche 12 oder 13, **dadurch gekennzeichnet, dass** das Luftfahrzeug eine Steuereinrichtung, eine Speichereinrichtung und eine Sensoreinrichtung aufweist, wobei die Sensoreinrichtung einen aktuellen Flugzustand erfasst und dieser durch die Steuereinrichtung mit Daten der Speichereinrichtung verglichen wird und zugeordnete Steuerdaten für das Ansaugen und Ausblasen von Luft ausgeführt werden.

## Claims

1. Wing-rotor assembly (1) having a rotor (22), wherein the rotor (22) has an inlet opening (21) which is closable by a closure means (3) and an outlet opening (25) which is closable by a further closure means (3), **characterized in that** the rotor (22) is disposed in a wing (11) in such a manner that the thrust direction of the rotor (22) is directed perpendicularly to the direction of incident flow (12) of the wing (11), wherein the closure means (3) in the closed state are partly permeable to air.

2. Wing-rotor assembly (1) according to Claim 1, **characterized in that** the closure means (3) have openings distributed in a planar manner.

3. Wing-rotor assembly (1) according to Claim 1, **characterized in that** the closure means (3) are at least partly porous.

4. Wing-rotor assembly (1) according to Claim 1, **characterized in that** construction-related gaps and openings of the closure means (3) guarantee the air permeability in the closed state.

5. Wing-rotor assembly (1) according to Claim 2, **characterized in that** the closure means (3) comprise a device for adjusting the direction of at least one opening (312).

6. Wing-rotor assembly (1) according to either of Claims 2 and 5, **characterized in that** at least one opening (312) is closable.

7. Wing-rotor assembly (1) according to one of the preceding claims, **characterized in that** the rotor (22) is a double rotor.

8. Wing-rotor assembly (1) according to one of the preceding claims, **characterized in that** at least one device for pressure control is disposed between the closure means (3) and the rotor (22).

9. Wing-rotor assembly (1) according to Claim 7, **characterized in that** a device for pressure control is in each case disposed on both sides of the rotor (22), between the rotor (22) and the closure means (3) .

10. Wing-rotor assembly (1) according to one of the preceding claims, **characterized in that** the wing (11) on the upper side and/or the lower side thereof has openings outside the closure means (3), wherein the openings on the upper side are connected to the space between the rotor (22) and the closure means (3) of the inlet opening (21) and/or the openings on the lower side are connected to the space between the rotor (22) and the closure means (3) of the outlet opening (25).

11. Aircraft having at least one wing-rotor assembly (1) according to one of the preceding claims.

12. Method for operating an aircraft having at least one wing (11) with an integrated rotor (22) having a thrust direction perpendicular to the direction of incident flow (12) of the wing (11), a drive means having a thrust direction in the direction of incident flow (12) of the wing (11), wherein the wing (11) has an inlet opening (21) of the rotor (22) which is closable by a closure means (3) and an outlet opening (25) which is closable by a further closure means (3), wherein the closure means (3) in the closed state are at least partly permeable to air, **characterized by** a targeted induction and expulsion of air in the region of the closure means (3) of the inlet opening (21) and/or of the outlet opening (25) of the rotor (22) of the wing-rotor assembly (1) so as to utilize the rotor (22) as a lifting rotor for a vertical take-off and landing operation of the aircraft, and by way of the partial air permeability of the closure means (3) in the closed state to influence the aerodynamic behaviour of the wing (11) with closed closure means.

13. Method according to Claim 12, **characterized in that** at least one of the following method steps is additionally carried out:
a) vertical take-off of the aircraft with opened closure means (3);
b) starting-up the drive means and transitioning to a flight operation moving in the direction of incident flow (12) of the at least one wing (11);
c) closing the closure means (3).

14. Method for operating an aircraft according to either of Claims 12 and 13, **characterized in that** the aircraft has a control device, a storage device and a sensor device, wherein the sensor device detects a current in-flight state and the latter by the control device is compared with data of the storage device, and assigned control data for the induction and expulsion of air are implemented.

## Revendications

1. Ensemble rotor-surface portante (1) comportant un rotor (22), le rotor (22) comportant une ouverture d'entrée (21) qui peut être fermée par un moyen de fermeture (3) et une ouverture de sortie (25) qui peut être fermée par un autre moyen de fermeture (3), **caractérisé en ce que** le rotor (22) est disposé dans une surface portante (11) de manière à ce que le sens de poussée du rotor (22) soit dirigé perpendiculairement au sens d'afflux (12) de la surface portante (11), les moyens de fermeture (3) étant partiellement perméables à l'air lorsqu'ils sont fermés.

2. Ensemble rotor-surface portante (1) selon la revendication 1, **caractérisé en ce que** les moyens de fermeture (3) comportent des ouvertures réparties de manière sensiblement bidimensionnelle.

3. Ensemble rotor-surface portante (1) selon la revendication 1, **caractérisé en ce que** les moyens de fermeture (3) sont au moins partiellement poreux.

4. Ensemble rotor-surface portante (1) selon la revendication 1, **caractérisé en ce que** des fentes et ouvertures, générées par construction, des moyens de fermeture (3) assurent la perméabilité à l'air à l'état fermé.

5. Ensemble rotor-surface portante (1) selon la revendication 2, **caractérisé en ce que** les moyens de fermeture (3) comprennent un dispositif de réglage de la direction d'au moins une ouverture (312).

6. Ensemble rotor-surface portante (1) selon l'une des revendications 2 ou 5, **caractérisé en ce qu'**au moins une ouverture (312) peut être fermée.

7. Ensemble rotor-surface portante (1) selon l'une des revendications précédentes, **caractérisé en ce que** le rotor (22) est un rotor double.

8. Ensemble rotor-surface portante (1) selon l'une des revendications précédentes, **caractérisé en ce qu'**au moins un dispositif de régulation de pression est disposé entre les moyens de fermeture (3) et le rotor (22) .

9. Ensemble rotor-surface portante (1) selon la revendication 7, **caractérisé en ce qu'**un dispositif de régulation de pression est disposé de part et d'autre du rotor (22) entre le rotor (22) et les moyens de fermeture (3).

10. Ensemble rotor-surface portante (1) selon l'une des revendications précédentes, **caractérisé en ce que** la surface portante (11) comporte des ouvertures à l'extérieur des moyens de fermeture (3) sur son côté supérieur et/ou côté inférieur, les ouvertures du côté supérieur étant reliées à l'espace ménagé entre le rotor (22) et les moyens de fermeture (3) de l'ouverture d'entrée (21) et/ou les ouvertures du côté inférieur étant reliées à l'espace ménagé entre le rotor (22) et les moyens de fermeture (3) de l'ouverture de sortie (25).

11. Aéronef, comportant au moins un ensemble rotor-surface portante (1) selon l'une des revendications précédentes.

12. Procédé de fonctionnement d'un aéronef comportant au moins une surface portante (11) à rotor intégré (22) présentant un sens de poussée perpendiculaire au sens d'afflux (12) de la surface portante (11), un moyen d'entraînement présentant un sens de poussée dans le sens d'afflux (12) de la surface portante (11), la surface portante (11) comportant une ouverture d'entrée (21) du rotor (22) qui peut être fermée par un moyen de fermeture (3) et une ouverture de sortie (25) qui peut être fermée par un autre moyen de fermeture (3), les moyens de fermeture (3) étant à l'état fermé au moins partiellement perméables à l'air, **caractérisé par** une aspiration ciblée et un soufflage d'air dans la zone des moyens de fermeture (3) de l'ouverture d'entrée (21) et/ou de l'ouverture de sortie (25) du rotor (22) de l'ensemble rotor-surface portante (1) afin d'utiliser le rotor (22) comme rotor de levage pour un fonctionnement de décollage et d'atterrissage vertical de l'aéronef et pour influer sur le comportement aérodynamique de la surface portante (11), lorsque les moyens de fermeture sont fermés, grâce à la perméabilité partielle à l'air des moyens de fermeture (3) à l'état fermé.

13. Procédé selon la revendication 12, **caractérisé en ce qu'**au moins une des étapes suivantes du procédé est en outre réalisée :
a) faire décoller verticalement l'aéronef avec des moyens de fermeture (3) ouverts ;
b) démarrer les moyens d'entraînement et passer en fonctionnement en vol avec un mouvement dans le sens d'afflux (12) de l'au moins une surface portante (11) ;
c) fermer les moyens de fermeture (3).

14. Procédé de fonctionnement d'un aéronef selon l'une des revendications 12 ou 13, **caractérisé en ce que** l'aéronef comporte un dispositif de commande, un dispositif de mémorisation et un dispositif de détection, le dispositif de détection détectant un état de vol actuel et celui-ci étant comparé par le système de commande à des données du dispositif de mémorisation et les données de commande associées sont exécutées pour l'aspiration et le soufflage de l'air.
